# FASCICULE DE BREVET EUROPEEN

(11) **EP 0 632 309 B1**
(45) Date de publication et mention de la délivrance du brevet: **22.04.1998**
(21) Numéro de dépôt: 94401490.1
(22) Date de dépôt: 30.06.1994
(51) Int. Cl.: G02F 1/025

(54) **Generateur d'impulsions optiques**
Optischer Impulsgenerator
Optical pulse generator

(30) Priorité: 02.07.1993 FR 9308138
(43) Date de publication de la demande: 04.01.1995
(73) Titulaire: FRANCE TELECOM, 75015 Paris (FR)
(72) Inventeur: Devaux, Fabrice, F-75014 Paris (FR)
(74) Mandataire: Martin, Jean-Jacques

(56) Documents cités:
- US-A- 3 748 597
- JOURNAL OF LIGHTWAVE TECHNOLOGY., vol.11, no.3, Mars 1993, NEW YORK US pages 468 - 473, XP000407022 Suzuki M et al 'Transform-limited optical pulse generation up to 20-GHz repetition rate by a sinusoidally driven InGaAsP electroabsorption modulator'
- L'ECHO DES RECHERCHES, no.149, 1992, FRANCE pages 29 - 38 Bigan E 'Guided wave electro-absorbing modulators for 1.55 mu m optical links'
- ELECTRONICS LETTERS., vol.28, no.11, Mai 1992, STEVENAGE GB pages 1007 - 1008, XP000363642 Suzuki M et al 'Transform-limited 14 ps optical pulse generation with 15 GHz repetition rate by InGaAsP electroabsorption modulator'

## Description

La présente invention est relative aux générateurs d'impulsions optiques du type comportant un modulateur électroabsorbant.

Des générateurs d'impulsions optiques à modulateurs électroabsorbants trouvent application dans des domaines techniques nécessitant la génération d'impulsions optiques courtes.

Ils sont par exemple utilisés dans des appareillages de mesure pour l'observation de phénomènes physiques ou chimiques rapides.

Ils sont également utilisés dans le domaine des télécommunications longues distances, pour la transmission par fibres optiques de données binaires à haut débit par codage en impulsions solitons ou modulation RZ conventionnelle.

Pour une synthèse de l'état de la technique des modulateurs électroabsorbants connus à ce jour, on pourra avantageusement se reporter à l'article : E.Bigan - "Modulateurs électroabsorbants en onde guidée pour liaisons optiques à 1,55 µm" - l'écho des Recherches n° 149- 3e trimestre 1992.

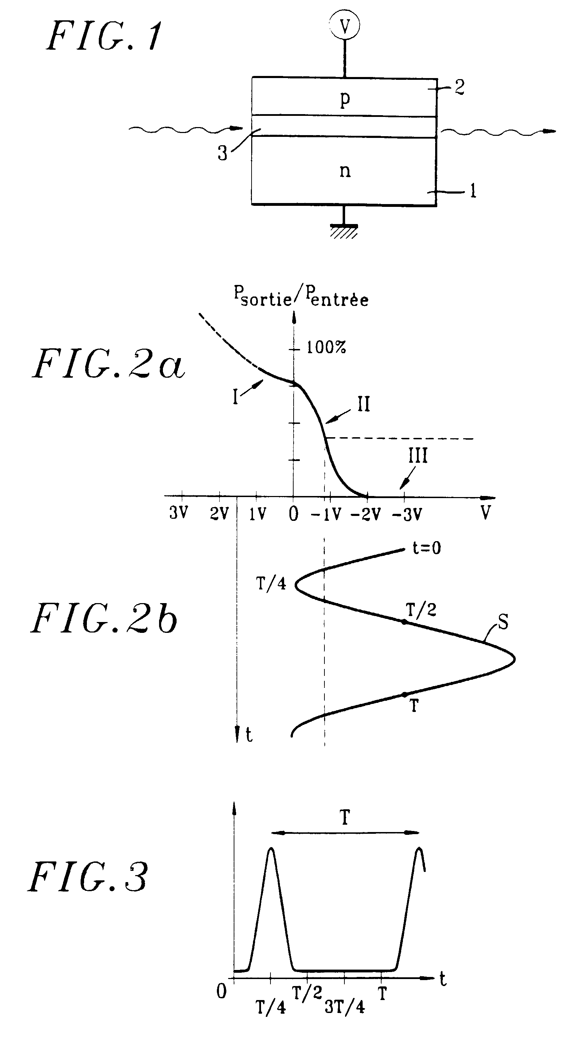

Un modulateur électroabsorbant du type de ceux qui sont connus à l'heure actuelle a été représenté schématiquement sur la figure 1. Un tel modulateur est une diode comportant deux couches minces 1 et 2 en matériaux dopés, respectivement n et p. Entre ces deux couches 1 et 2 est interposée une couche 3 qui constitue une région non intentionnellement dopée dans laquelle est inclus un matériau électroabsorbant. Une telle diode n-i-p possède en outre une structure de guide d'onde.

L'absorption du matériau électroabsorbant de la couche intermédiaire 3 varie en fonction de la tension V appliquée entre les deux couches minces 1 et 2 de la diode.

On caractérise habituellement la transmission d'une couche dans laquelle est inclus un matériau électroabsorbant par le rapport entre les puissances de sortie et d'entrée des flux lumineux envoyés sur cette couche. Sur la figure 2a des dessins annexés a été représentée la courbe de transmission du modulateur de la figure 1 en fonction de la tension V appliquée entre ses deux couches minces dopées 1 et 2. Ainsi que l'illustre cette courbe, lorsque la diode qui constitue ce modulateur est polarisée en direct (V supérieure à zéro), un courant passe dans la diode et le matériau électroabsorbant fonctionne en régime laser ou amplificateur optique (partie I de la courbe).

Lorsqu'au contraire la diode est polarisée en inverse (V inférieure à zéro), elle se trouve bloquée et un champ électrique est généré sur le matériau électroabsorbant. L'absorption de ce matériau varie en fonction de la valeur de la tension V appliquée. En particulier, le matériau électroabsorbant est transparent lorsque cette tension est faible ou nulle (partie II de la courbe) et absorbant pour des tensions inverses plus importantes en valeur absolue (partie III de la courbe).

Il a déjà été proposé, pour générer des impulsions optiques courtes, de commander un tel modulateur électroabsorbant par un signal de tension sinusoïdal.

On pourra avantageusement se référer à cet égard à l'article : TRANSFORM-LIMITED 14ps OPTICAL PULSE GENERATION WITH 15 GHz REPETITION RATE BY InGaAsP ELECTROABSORPTION MODULATEUR - M. Suzuki, H. Tanaka, K. Utaka, N. Edagawa and Y. Matsuchima - ELECTRONICS LETTERS 21st May 1992 Vol. 28 No. 11.

Ainsi que cela a été décrit dans cet article, un tel signal polarise la diode qui constitue le modulateur en inverse. Il est de fréquence fixe et d'amplitude beaucoup plus importante que la tension de commande du modulateur.

On a représenté sur la figure 2b un signal S sinusoïdal pour la commande en tension d'un modulateur électroabsorbant présentant la courbe de transmission de la figure 2a. Ainsi qu'on peut le voir sur cette figure 2b, c'est en ses sommets de sinusoïde proche de la tension nulle que ce signal S prend des valeurs où il commande l'état de transparence du matériau électroabsorbant.

Les impulsions ainsi générées sont des impulsions courtes dont le taux de répétition est égal à la fréquence du signal de commande. Elles ont été représentées sur la figure 3.

Un tel générateur d'impulsions optiques présente plusieurs inconvénients.

Etant donné que l'état transparent du modulateur électroabsorbant correspond aux sommets de sinusoïde du signal de commande, le réglage de la largeur des impulsions produites est limité. En particulier, le rapport de la largeur des impulsions à la période de répétion est supérieur à une valeur minimum. L'existence de cette valeur minimum empêche d'utiliser les modulateurs électroabsorbants connus à ce jour pour la génération d'impulsions très courtes, et notamment d'utiliser ces modulateurs électroabsorbants dans les techniques de multiplexage temporel de plusieurs trains d'impulsions.

En outre, avec un tel générateur d'impulsions optiques, il est nécessaire de surveiller en permanence les éventuelles dérives du signal de tension de commande. Celui-ci, en effet, doit, pour ne pas remettre en cause la fiabilité du dispositif, ne pas dépasser la tension d'avalanche de la diode. En outre, pour éviter que le matériau électroabsorbant ne fonctionne en régime amplificateur ou laser, ce signal de commande doit rester négatif.

La présente invention a pour but principal de pallier ces différents inconvénients.

On connaît déjà par le document US 3,748,597 un générateur d'impulsions optiques comportant :
- une source pour la génération d'un faisceau lumineux,
- un modulateur électroabsorbant pour moduler ce flux lumineux en impulsions optiques, ce modulateur électroabsorbant comportant au moins deux couches en des matériaux semi-conducteurs dopées et au moins une couche intermédiaire interposée entre ces deux couches, la couche intermédiaire étant en un matériau non intentionnellement dopé dans lequel est inclus un matériau électroabsorbant, l'état absorbant ou transparent de cette couche intermédiaire étant commandé par une tension appliquée entre deux des couches dopées,
- des moyens pour commander ce modulateur avec une tension de commande de type périodique,
les deux couches du modulateur entre lesquelles la tension est appliquée présentant un dopage de même signe, la transmission du modulateur en fonction de la tension qui le commande étant maximale au voisinage de la tension nulle et symétrique par rapport à celle-ci, ladite tension de commande du modulateur étant une tension périodique.

La solution selon l'invention consiste en ce que lesdits moyens délivrent une tension centrée sur la tension nulle.

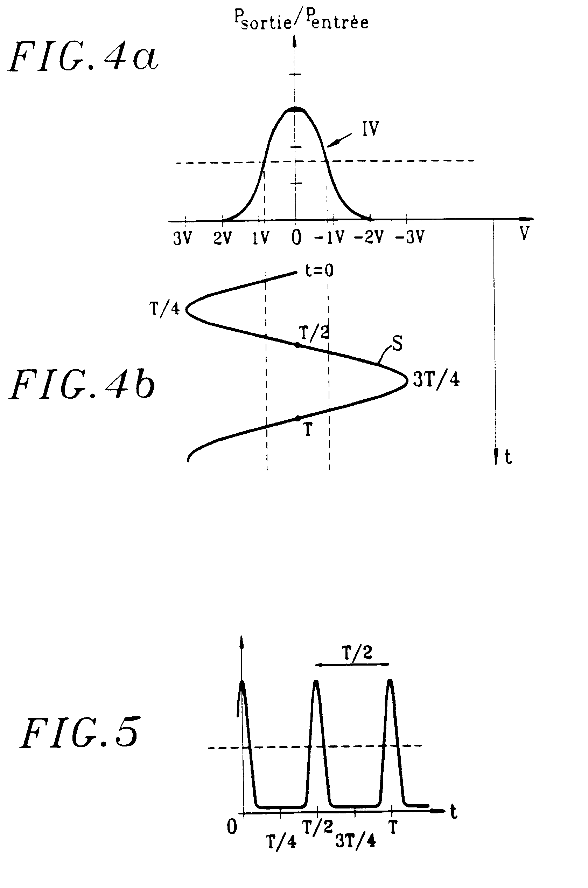

D'autres caractéristiques et avantages ressortiront encore de la description qui suit d'un mode de réalisation possible pour l'invention. Cette description doit être lue en regard des dessins annexés sur lesquels :
. la figure 4a représente schématiquement la courbe de transmission en fonction de la tension du modulateur électroabsorbant du générateur de l'invention,

- la figure 4b représente schématique un signal sinusoïdal pour la commande en tension d'un modulateur présentant la courbe de transmission représentée sur la figure 4a, ce signal permettant la génération d'impulsions optiques périodiques,

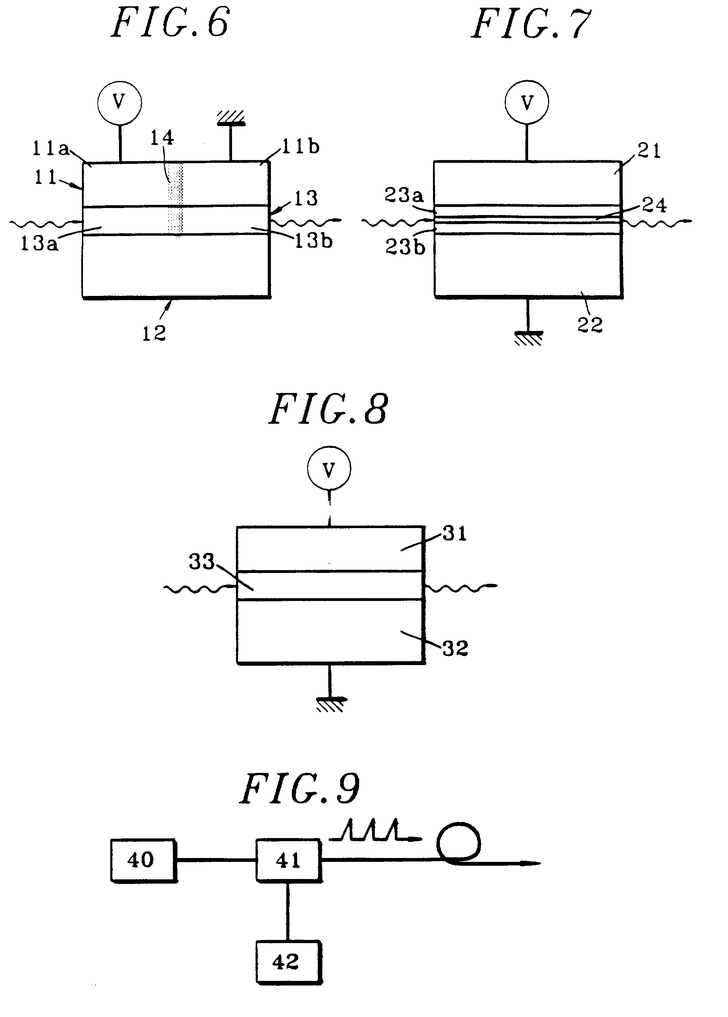

. la figure 5 représente un train d'impulsions de sortie générées avec le signal sinusoïdal de la figure 4b ;
. les figures 6 à 8 représentent schématiquement plusieurs variantes possibles de modulateurs électroabsorbants ;
. la figure 9 représente par schéma-blocs un générateur d'impulsions optiques conforme à l'invention.

Selon l'invention, on propose d'utiliser un modulateur dont la courbe de transmission en fonction de la tension appliquée aux bornes de ce modulateur est maximale pour des tensions au voisinage de la tension nulle et est symétrique par rapport à cette tension nulle. Une telle courbe a été représentée sur la figure 4a sur laquelle la zone de transmission d'un tel modulateur a été référencée sur la figure 4a par IV.

La génération d'impulsions périodiques avec un modulateur présentant une courbe de transmission de ce type est avantageusement réalisées à l'aide d'un signal de commande périodique, par exemple sinusoïdal, centré sur la tension nulle. Une tension de commande de ce type a été représentée sur la figure 4b.

Ainsi qu'on peut le voir sur cette figure 4b, la partie du signal qui commande l'état transparent du modulateur est celle où la variation du signal de commande est la plus rapide (pente maximale). Ainsi, le rapport de la largeur des impulsions générées à la période de répétition n'est plus limité et peut être beaucoup plus petit que ce que permettent les modulateurs électroabsorbants de l'art antérieur. Un train d'impulsions optiques générées avec un tel signal de commande a été représenté sur la figure 5.

On va maintenant décrire plusieurs exemples de modulateurs électroabsorbants dont les courbes de transmission optique sont du type de celle de la figure 4a.

De façon générale, un modulateur selon l'invention est d'une structure qui le rend équivalent à un montage comportant deux modulateurs du type de ceux de l'art antérieur montés en inverse l'un par rapport à l'autre. Ainsi, lorsque la tension de commande appliquée à l'ensemble est non nulle, l'une des diodes qui constituent ces modulateurs est en régime direct, tandis que l'autre est en régime inverse. L'état transparent du modulateur n'est obtenu que lorsque la tension aux bornes de chacune des deux diodes équivalentes est au voisinage de 0 Volt, c'est-à-dire lorsque la tension de commande aux bornes du modulateur est elle-même au voisinage de 0 Volt.

Le modulateur représenté sur la figure 6 comporte principalement deux couches 11 et 12 dopées, l'une n, l'autre p, entre lesquelles est interposée une couche intermédiaire 13 non intentionnellement dopée dans laquelle est inclus un matériau électroabsorbant.

Une isolation transversale localisée 14 traverse les couches 11 et 13 dans leur épaisseur et sépare ces deux couches chacune en deux demi-couches isolées référencées respectivement par 11a et 11b et 13a et 13b. On réalise ainsi deux diodes montées en inverse qui sont constituées respectivement l'une par les couches 11a et 12 et la couche intermédiaire 13a, l'autre par les couches 11b et 12 et la couche intermédiaire 13b. La tension de commande V est appliquée, ainsi que schématisée sur la figure 6, entre les deux couches 11a et 11b qui présentent un dopage de même signe.

Lorsque l'une ou l'autre des couches 13a et 13b est absorbante, c'est-à-dire lorsque la tension de commande prend une valeur éloignée de 0 Volt, l'une des deux couches intermédiaires 13a et 13b est absorbante. Le modulateur ainsi constitué est alors absorbant.

Lorsqu'au contraire la tension de commande est au voisinage de la tension nulle, les deux couches 13a et 13b sont transparentes. La transmission est maximale.

On se réfère maintenant à la figure 7 sur laquelle a été représenté un modulateur électroabsorbant conforme à un autre mode de réalisation possible de l'invention. Ce modulateur comporte deux couches 21 et 22 présentant un dopage de même signe (p ou n) entre lesquelles est interposée une couche intermédiaire 23. Cette couche intermédiaire 23 est elle-même séparée en deux sous-couches 23a et 23b par une couche 24 présentant un dopage de signe contraire de celui des couches 21 et 22. Ces deux sous-couches 23a et 23b sont toutes deux non intentionnellement dopées et incluent un matériau électroabsorbant.

Une telle structure est donc équivalente à deux diodes n-i-p superposées et montées en inverse, ces diodes étant constituées l'une par la couche 21, la sous-couche 23a, la couche dopée 24, l'autre par le substrat 22, la sous-couche 23b, la couche dopée 24. Lorsqu'une tension non nulle est appliquée entre les couches 21 et 22, l'une des deux diodes précitées est polarisée directe, tandis que l'autre fonctionne en inverse. La tension aux bornes de la diode polarisée directe est sensiblement nulle, tandis que la tension aux bornes de l'autre est sensiblement égale à la tension du signal de commande. Le modulateur ainsi constitué présente une transparence maximale lorsque les deux sous-couches 23a et 23b sont transparentes, c'est-à-dire lorsque la tension de commande est voisine de la tension nulle.

On a représenté encore sur la figure 8 un modulateur conforme à un autre mode de réalisation possible encore pour l'invention. Ce modulateur comporte deux couches 31 et 32 entre lesquels est interposée une couche non intentionnellement dopée dans laquelle est inclus un matériau électroabsorbant 33. Les couches couches 31 et 32 présentent un dopage de même signe (n ou p). Les couches 31 et 32 et la couche intermédiaire 33 constituent ainsi une diode n-i-n ou p-i-p. Le fonctionnement d'une telle diode formant modulateur électroabsorbant est sensiblement analogue à celui du modulateur représenté sur la figure 7.

Dans les différents exemples qui viennent d'être décrits, les couches dopées n ou p sont classiquement des matériaux semi-conducteurs des colonnes III et V de la table de Mendéléev, que l'on fait croître par épitaxie sur un substrat.

Dans la variante de réalisation qui présente une isolation, celle-ci est par exemple réalisée par implantation d'ions H⁺.

Les matériaux électroabsorbants peuvent être des matériaux semi-conducteurs massifs III-V à effet Franz-Keldysh, des matériaux à structure à puits quantiques ou encore des matériaux à structure en super-réseaux à localisation de Wannier-Stark. On se référera avantageusement pour leur fabrication et leur mise en oeuvre aux différentes publications suivantes, dont l'enseignement est ici inclus par référence :
- E.Bigan - "Modulateurs électroabsorbants non guidés pour liaisons optiques à 1,55 µm" - l'écho des Recherches n° 149- 3e trimestre 1992
- F. Devaux, E. Bigan, A. Ougazzaden, B. Pierre, F. Huet, M. Carré, and A. Carenco - InGaAsP/InGaAsP Multiple-Quantum-Well Modulator with Improved Saturation Intensity and Bandwidth Over 20 GHz - IEEE. 1041-1135. 1992 ;
- F.Devaux - "Fabrication, caractérisation et mise en oeuvre des modulateurs électroabsorbants non guidés à 1,55 µM pour les liaisons à très haut débit" - thèse soutenue le 26 mars 1993 - Université de Paris Sud Centre d'Orsay.

Le générateur d'impulsions optiques représenté sur la figure 9 comporte classiquement une source laser 40 et un modulateur électroabsorbant 41 commandé en tension par un générateur de tension sinusoidale 42.

Selon l'invention, le modulateur 41 est du type précédemment décrit. Le générateur 42 fournit un signal de commande de type périodique, par exemple sinusoïdal, centré sur la tension nulle.

Ainsi qu'on l'aura noté, les générateurs d'impulsions optiques et les modulateurs électroabsorbants qui viennent d'être décrits permettent de pallier les différents inconvénients des modulateurs électroabsorbants de l'état de la technique.

En particulier :
- ils permettent d'obtenir des impulsions optiques dont le rapport entre la largeur d'impulsions et la période de répétition n'est pas limité ;
- les tensions qui les commandent sont d'amplitude moins importante que celles des tensions de commande des modulateurs électroabsorbants de l'art antérieur ;
- ils permettent de supprimer les risques de dépassement de tension d'avalanche ou de fonctionnement en régime laser ou amplificateurs.

On notera également que les générateurs et modulateurs conformes à l'invention présentent l'avantage de générer des impulsions dont le taux de répétition est le double de la fréquence du signal de commande, alors que ce taux de répétion est égal à la fréquence du signal de commande pour les générateurs d'impulsions optiques de l'art antérieur.

## Revendications

1. Générateur d'impulsions optiques comportant :
- une source (40) pour la génération d'un faisceau lumineux,
- un modulateur (41) électroabsorbant pour moduler ce flux lumineux en impulsions optiques, ce modulateur électroabsorbant comportant au moins deux couches en des matériaux semi-conducteurs dopées (11a, 11b, 12 ; 21, 22 ; 31, 32) et au moins une couche intermédiaire (13a, 13b ; 23 ; 33) interposée entre ces deux couches, la couche intermédiaire (13a, 13b ; 23 ; 33) étant en un matériau non intentionnellement dopé dans lequel est inclus un matériau électroabsorbant, l'état absorbant ou transparent de cette couche intermédiaire (13a, 13b ; 23 ; 33) étant commandé par une tension (V) appliquée entre deux (11a, 11b ; 21, 22 ; 31, 32) des couches dopées,
- des moyens (42) pour commander ce modulateur avec une tension de commande de type périodique,
les deux couches du modulateur (11a, 11b ; 21, 22 ; 31, 32) entre lesquelles la tension (V) est appliquée présentant un dopage de même signe, la transmission du modulateur en fonction de la tension (V) qui le commande étant maximale au voisinage de la tension nulle et symétrique par rapport à celle-ci, ladite tension de commande (V) du modulateur étant une tension périodique,
caractérisé en ce que lesdits moyens sont adaptés pour délivrer une tension centrée sur la tension nulle.

2. Générateur selon la revendication 1, caractérisé en ce que le modulateur comporte au moins une couche (12, 24) qui présente un dopage de signe contraire au dopage des couches (11a, 11b ; 21, 22) entre lesquelles la tension de commande (V) est appliquée et qui réalise avec celles-ci et avec la (ou les) couche(s) intermédiaire(s) (13, 23a, 23b), deux diodes p-i-n montées en inverse l'une par rapport à l'autre.

3. Générateur selon la revendication 2, caractérisé en ce que la couche intermédiaire (13) est interposée entre deux couches (11,12) qui présentent l'une un dopage n, l'autre un dopage p, une isolation transversale (14) s'étendant dans l'épaisseur de l'une (11) de ces deux couches et de la couche intermédiaire (13).

4. Générateur selon la revendication 2, caractérisé en ce que la couche intermédiaire est comprise entre deux couches présentant un dopage de même signe et est séparée en deux sous-couches par une couche interposée qui présente un dopage de signe contraire.

5. Générateur selon la revendication 1, caractérisé en ce que le modulateur est une diode p-i-p ou une diode n-i-n.

## Patentansprüche

1. Optischer Impulsgenerator mit:
- einer Quelle (40) zum Erzeugen eines Lichtstrahles,
- einem elektroabsorbierenden Modulator (41) zum Modulieren des Lichtflusses in optische Impulse, wobei der elektroabsorbierende Modulator wenigstens zwei Schichten aus dotierten Halbleitermaterialien (11a, llb, 12; 21, 22; 31, 32) und wenigstens eine zwischen diesen beiden Schichten angeordnete Zwischenschicht (13a, 13b; 23; 33) aufweist, wobei die Zwischenschicht (13a, 13b; 23; 33) aus einem nicht beabsichtigterweise dotierten Material besteht, in dem ein elektroabsorbierendes Material enthalten ist, wobei der absorbierende oder transparente Zustand dieser Zwischenschicht (13a, 13b; 23; 33) mittels einer zwischen zwei (11a, 11b; 21, 22; 31, 32) der dotierten Schichten angelegten Spannung (V) gesteuert wird,
- Mitteln (42) zum Steuern des Modulators mit einer Steuerspannung periodischer Art, wobei die beiden Schichten des Modulators (11a, 11b; 21, 22; 31, 32), zwischen denen die Spannung (V) angelegt wird, eine Dotierung mit dem selben Vorzeichen aufweisen, die Übertragung des Modulators als Funktion der ihn steuernden Spannung (V) maximal in der Nähe der Spannung Null und symmetrisch ist, die Steuerspannung (V) des Modulators eine periodische Spannung ist,
dadurch gekennzeichnet, daß die Mittel dazu ausgelegt sind, eine um die Spannung Null zentrierte Spannung zu liefern.

2. Generator nach Anspruch 1, dadurch gekennzeichnet, daß der Modulator wenigstens eine Schicht (12, 24) aufweist, die eine Dotierung mit umgekehrtem Vorzeichen zur Dotierung der Schichten (11a, 11b; 21, 22) aufweist, zwischen denen die Steuerspannung (V) angelegt wird, und die mit diesen und mit der (oder den) Zwischenschicht(en) (13, 23a, 23b) zwei p-i-n Dioden realisiert, die entgegengesetzt zueinander angeordnet sind.

3. Generator nach Anspruch 2, dadurch gekennzeichnet, daß die Zwischenschicht (13) zwischen zwei Schichten (11, 12) angeordnet ist, von denen die eine eine n-Dotierung und die andere eine p-Dotierung aufweist, und eine transversale Isolierung (14) sich in die Tiefe der einen (11) der beiden Schichten und der Zwischenschicht (13) erstreckt.

4. Generator nach Anspruch 2, dadurch gekennzeichnet, daß die Zwischenschicht zwischen zwei Schichten aufgenommen ist, die eine Dotierung mit demselben Vorzeichen aufweisen, und um zwei Unterschichten von einer Zwischenschicht entfernt ist, die eine Dotierung mit ungekehrtem Vorzeichen aufweist.

5. Generator nach Anspruch 1, dadurch gekennzeichnet, daß der Modulator eine p-i-p Diode oder eine n-i-n Diode ist.

## Claims

1. A light pulse generator comprising:
a source (40) for generating a light beam;
an electroabsorbent modulator (41) for modulating said light beam into light pulses, said electroabsorbent modulator including at least two doped layers (11a, 11b, 12; 21, 22; 31, 32) made of semiconductor material and at least one intermediate layer (13a, 13b; 23; 33) interposed between said two layers, the intermediate layer (13a, 13b; 23; 33) being made of a material that is not intentionally doped and that has an electroabsorbent material included therein, the electroabsorbent or transparent state of said intermediate layer (13a, 13b; 23; 33) being controlled by a voltage (V) applied across two of the doped layers (11a, 11b; 21, 22; 31, 32); and
means (42) for controlling said modulator by means of a periodic type control voltage;
the two layers (11a, 11b; 21, 22; 31. 32) of the modulator between which the voltage (V) is applied have doping of the same sign, light transmission of the modulator as a function of the control voltage (V) applied thereto being at a maximum in the vicinity of zero volts and being symmetrical thereabout, said control voltage (V) for the modulator being a periodic voltage,
characterized in that said means are adapted to deliver a voltage centered on zero volts.

2. A generator according to claim 1, characterized in that the modulator includes at least one layer (12, 24) having doping of sign opposite to the doping of the layers (11a, 11b; 21, 22) between which the control voltage (V) is applied and which co-operates therewith and with the intermediate layer(s) (13, 23a, 23b) to form two P-I-N diodes connected with opposite forward conduction directions.

3. A generator according to claim 2, characterized in that the intermediate layer (13) is interposed between two layers (11, 12) one of which has N-type doping and the other P-type doping, transverse insulation (14) extending through the thickness of one (11) of said two layers and through the intermediate layer (13).

4. A generator according claim 2, characterized in that the intermediate layer lies between two layers having same-sign doping and is itself subdivided into two sublayers by an interposed layer that has opposite-sign doping.

5. A generator according to claim 1, characterized in that the modulator comprises a P-I-P diode or an N-I-N diode.
